# EUROPÄISCHE PATENTSCHRIFT

(11) **EP 4 339 088 B1**
(45) Veröffentlichungstag und Bekanntmachung des Hinweises auf die Patenterteilung: **16.07.2025**
(21) Anmeldenummer: 23191235.3
(22) Anmeldetag: 14.08.2023
(51) Int. Cl.: B62M 6/45, B60L 15/20, B60L 50/20

(54) **VERFAHREN ZUM BETREIBEN EINES ELEKTROFAHRRADS**
METHOD FOR OPERATING AN ELECTRIC BICYCLE
PROCÉDÉ DE FONCTIONNEMENT D'UNE BICYCLETTE ÉLECTRIQUE

(30) Priorität: 16.09.2022 DE 102022209772
(43) Veröffentlichungstag der Anmeldung: 20.03.2024
(73) Patentinhaber: Robert Bosch GmbH, 70442 Stuttgart (DE)
(72) Erfinder: Klug, Silas, 71106 Magstadt (DE); Moia, Alessandro, 71088 Holzgerlingen (DE)

(56) Entgegenhaltungen:
- DE-A1- 102020 215 222
- DE-A1- 102020 215 391
- DE-A1- 102020 215 569
- US-A1- 2017 247 080

## Beschreibung

### Stand der Technik

Die vorliegende Erfindung betrifft ein Verfahren zum Betreiben eines Elektrofahrrads, sowie ein Elektrofahrrad.

Bekannt sind Elektrofahrräder mit hydraulischen Bremssystemen, die Aktuatoren aufweisen, mittels welchen ein Bremsdruck im Bremssystem gesteuert erzeugt werden kann. Beispielsweise kann ein solcher Aktuator Teil eines Antiblockiersystems sein. Häufig soll dabei durch eine Druckmodulation des hydraulischen Bremsdrucks im System ein Blockieren von Rädern des Fahrzeugs verhindert werden.

Das Dokument DE 10 2020 215569 A1 offenbart die Merkmale der Präambel des Anspruchs 1.

### Offenbarung der Erfindung

Das erfindungsgemäße Verfahren mit den Merkmalen des Anspruchs 1 zeichnet sich dadurch aus, dass ein besonders flexibler und effizienter Fahrbetrieb des Elektrofahrrads bereitgestellt werden kann. Insbesondere kann dabei ein besonders hoher Fahrkomfort für einen Fahrer des Elektrofahrrads ermöglicht werden. Dies wird erfindungsgemäß erreicht durch ein Verfahren zum Betreiben eines Elektrofahrrads, wobei das Elektrofahrrad ein Bremssystem und eine steuerbar betätigbare Antriebseinheit aufweist. Insbesondere ist die Antriebseinheit eingerichtet, um ein Motordrehmoment im Ansprechen auf eine Pedalbetätigung durch den Fahrer bereitzustellen, um eine Tretkraft des Fahrers motorisch zu unterstützen. Das Bremssystem weist einen steuerbar betätigbaren Aktuator auf, um gesteuert ein Bremsmoment erzeugen zu können. Vorzugsweise ist das Bremssystem als ein hydraulisches Bremssystem ausgebildet. Das Verfahren umfasst die Schritte:
- gesteuertes Erzeugen eines Bremsmoments mittels des Bremssystems, und
- gesteuertes Erzeugen eines Antriebsmoments mittels der Antriebseinheit.

Das gesteuerte Erzeugen des Bremsmoments und das gesteuerte Erzeugen des Antriebsmoments wird dabei gleichzeitig durchgeführt und erfolgt derart in Abhängigkeit voneinander, um das Elektrofahrrad mit einem vorbestimmten Gesamt-Bremsmoment zu verzögern, oder um das Elektrofahrrad mit einem vorbestimmten Gesamt-Antriebsmoment zu beschleunigen. Vorzugsweise wird dabei während des Verfahrens gleichzeitig ein Bremsmoment und ein Antriebsmoment von jeweils größer als Null erzeugt.

Mit anderen Worten erfolgt bei dem Verfahren eine koordinierte Regelung von Bremsmoment und Antriebsmoment in Abhängigkeit voneinander. Dadurch kann eine besonders hohe Flexibilität im Fahrbetrieb des Elektrofahrrads bereitgestellt werden. Beispielsweise kann dadurch ein besonders großer Drehmoment-Bereich im Fahrbetrieb des Elektrofahrrads durch die gesteuerte Regelung abgedeckt werden. Das heißt, es kann beispielsweise flexibel eine Beschleunigung oder eine Verzögerung des Elektrofahrrads durch die entsprechende koordinierte Steuerung von Bremssystem und Antriebseinheit erreicht werden, insbesondere ohne dass ein aktiver Eingriff des Fahrers erforderlich ist, beispielsweise mittels einer Bremshebelbetätigung. Somit können eine Vielzahl an automatischen Fahrfunktionen auf einfache und effiziente Weise bereitgestellt werden, wodurch ein besonders hoher Fahrkomfort für den Fahrer des Elektrofahrrads ermöglicht werden kann.

Die Unteransprüche haben bevorzugte Weiterbildungen der Erfindung zum Inhalt.

Bevorzugt wird in einem ersten Betriebsmodus der Aktuator des Bremssystems derart betätigt, um ein vorbestimmtes konstantes Bremsmoment zu erzeugen. Das heißt, insbesondere wird mittels des Aktuator ein konstanter Bremsdruck im Bremssystem erzeugt. Dadurch kann erreicht werden, dass ein Arbeitsbereich der Antriebseinheit insgesamt hin zu niedrigeren Drehmomenten verschoben wird. Das heißt, es kann alleine durch Anpassung des mittels der Antriebseinheit bereitstellbaren Antriebsmoments ein Drehmomentbereich abgedeckt werden, der sowohl eine Beschleunigung, als auch eine Verzögerung des Elektrofahrrads zulässt. Beispielsweise kann hierbei durch Reduktion des Antriebsmoments der Antriebseinheit auf einen niedrigeren Wert als das mittels des Bremssystems erzeugte konstante Bremsmoment die Verzögerung des Elektrofahrrads erreicht werden. Somit kann durch eine besonders einfache und effektive Regelung eine besonders hohe Flexibilität im Fahrbetrieb des Elektrofahrrads bereitgestellt werden. Insbesondere können auf einfache Weise vorteilhafte Fahrfunktionen bereitgestellt werden, welche alleine durch die Steuerung der Antriebseinheit umgesetzt werden können. Beispielsweise kann dadurch auf besonders einfache Weise eine Traktionskontrolle und/oder Verhinderung oder ein Abschwächen der Auswirkungen eines Abhebens eines Vorderrades des Elektrofahrrads bereitgestellt werden.

Besonders bevorzugt entspricht das vorbestimmte konstante Bremsmoment mindestens 10 %, vorzugsweise maximal 80 %, bevorzugt mindestens 30 %, besonders bevorzugt maximal 60 %, eines Maximal-Antriebsmoments, welches maximal mittels der Antriebseinheit erzeugbar ist. Damit kann sichergestellt werden, dass durch die alleinige Steuerung der Antriebseinheit ein Drehmomentbereich abgedeckt werden kann, der auch eine ausreichende Verzögerung des Elektrofahrrads für vielfältige Fahrfunktionen ermöglicht.

Vorzugsweise erfolgt das Erzeugen des vorbestimmten konstanten Bremsmoments unabhängig von einer Bremshebelkraft an einem Bremshebel des Elektrofahrrads. Insbesondere ist der Bremshebel vorgesehen, um eine manuelle Erzeugung eines Bremsdruck im Bremssystem zu ermöglichen. Das heißt, das konstante Bremsmoment wird im ersten Betriebsmodus auch dann erzeugt, wenn keine Betätigung des Bremshebels vorliegt. Somit kann eine vollständig automatisierte Funktion bereitgestellt werden, welche sowohl eine Beschleunigung als auch eine Verzögerung des Elektrofahrrads erlaubt.

Weiter bevorzugt umfasst das Verfahren ferner den Schritt: Erfassen eines Radschlupfes, vorzugsweise eines angetriebenen bzw. antreibbaren Rads des Elektrofahrrads, insbesondere eines Hinterrads. Das gesteuerte Erzeugen des Antriebsmoments, das mittels der Antriebseinheit bereitgestellt wird, wird dabei in Abhängigkeit des erfassten Radschlupfes durchgeführt. Bevorzugt wird das Antriebsmoment der Antriebseinheit reduziert, wenn der erfasste Radschlupf einen vorbestimmten Radschlupf-Grenzwert überschreitet. Mit anderen Worten kann durch das entsprechende gesteuerte Betätigen der Antriebseinheit eine Traktionskontrolle durchgeführt werden, insbesondere derart, um den Radschlupf zu reduzieren. Insbesondere in Kombination mit einem durch das Bremssystem erzeugten konstanten Bremsdruck kann dabei aktiv und automatisch ein gezieltes Abbremsen des durchdrehenden Rades erreicht werden, wodurch eine besonders effektive Traktionskontrolle in verschiedensten Fahrsituationen bereitgestellt werden kann.

Besonders bevorzugt umfasst das Verfahren ferner den Schritt: Erfassen eines Nickwinkels des Elektrofahrrads. Als Nickwinkel wird insbesondere eine Auslenkung des Elektrofahrrads um eine Querachse, welche beispielsweise parallel zu einer Tretlagerachse sein kann, angesehen. Das gesteuerte Erzeugen des Antriebsmoments wird dabei in Abhängigkeit des erfassten Nickwinkels durchgeführt. Bevorzugt wird dabei das Antriebsmoment der Antriebseinheit reduziert, wenn der erfasste Nickwinkel einen vorbestimmten Nickwinkel-Grenzwert überschreitet. Dadurch kann beispielsweise ein Abheben eines Vorderrades des Elektrofahrrads verhindert, oder dessen Auswirkung abgeschwächt werden. Das heißt, es kann beispielsweise eine Wheelie-Verhinderung bereitgestellt werden. Alternativ bevorzugt zu einem Vergleich des erfassten Nickwinkels kann beispielsweise auch eine Nickwinkel-Änderung ermittelt werden, wobei das Antriebsmoment vorzugsweise reduziert wird, wenn die Nickwinkel-Änderung einen vorbestimmten Grenzwert überschreitet.

Vorzugsweise erfolgt in einem zweiten Betriebsmodus das gesteuerte Erzeugen des Bremsmoments und das gesteuerte Erzeugen des Antriebsmoments derart, um das Elektrofahrrad im Stillstand zu halten. Das heißt, Bremsmoment und Antriebsmoment werden derart koordiniert, dass das Elektrofahrrad, vorzugsweise ausschließlich durch Bremsmoment und Antriebsmoment, im Stillstand gehalten wird. Insbesondere ist somit, beispielsweise auch an Steigungen oder Gefällen, keine manuelle Bremsbetätigung oder Pedalbetätigung durch den Fahrer des Elektrofahrrads erforderlich, um das Elektrofahrrad im Stillstand zu halten. Somit kann ein besonders hoher Fahrkomfort für den Fahrer beim Betrieb des Elektrofahrrads bereitgestellt werden.

Bevorzugt umfasst das Verfahren ferner den Schritt: Erfassen einer Neigung des Elektrofahrrads, insbesondere relativ zu einer Horizontalen. Das gesteuerte Erzeugen des Bremsmoments und das gesteuerte Erzeugen des Antriebsmoments wird dabei in Abhängigkeit der erfassten Neigung durchgeführt. Damit kann auf besonders einfache und effektive Weise ein automatisches Halten des Elektrofahrrads an einer Steigung oder an einem Gefälle ermöglicht werden.

Vorzugsweise wird das gesteuerte Erzeugen des Bremsmoments und das gesteuerte Erzeugen des Antriebsmoments zusätzlich in Abhängigkeit eines Gesamtgewichts des Elektrofahrrads durchgeführt. Insbesondere wird als Gesamtgewicht zumindest ein Eigengewicht des Elektrofahrrads, und zusätzlich ein Gewicht des Fahrers und einer Beladung des Elektrofahrrads angesehen. Vorzugsweise wird basierend auf dem Gesamtgewicht und der erfassten Neigung ein erforderliches Antriebsmoment und/oder Bremsmoment ermittelt, um das Elektrofahrrad an der entsprechenden Neigung im Stillstand zu halten. Beispielsweise kann das Gesamtgewicht manuell durch den Fahrer des Elektrofahrrads eingegeben werden. Dadurch kann auf besonders einfache und effiziente Weise ermöglicht werden, dass das Elektrofahrrad durch den automatischen Betrieb von Bremssystem und Antriebseinheit an Steigungen oder Gefällen gehalten wird.

Besonders bevorzugt umfasst das Verfahren ferner den Schritt: gesteuertes Reduzieren eines mittels des Bremssystems erzeugten Bremsdrucks im Ansprechen auf eine Pedalbetätigung. Der Bremsdruck wird dabei derart reduziert, dass das Elektrofahrrad durch das mittels der Antriebseinheit erzeugte Antriebsmoment beschleunigt wird. Das heißt, durch die koordinierte Regelung von Antriebsmoment und Bremsmoment, wobei das Bremsmoment insbesondere durch das Reduzieren des Bremsdrucks angepasst wird, wird, wenn der Fahrer das Pedal des Elektrofahrrads betätigt, ein automatisches Anfahren des Elektrofahrrads aus dem Stillstand, beispielsweise an einer Steigung, initiiert.

Weiter bevorzugt umfasst das Verfahren ferner den Schritt: Erfassen eines Nickwinkels des Elektrofahrrads. Als Nickwinkel wird insbesondere eine Auslenkung des Elektrofahrrads um eine Querachse, welche beispielsweise parallel zu einer Tretlagerachse sein kann, angesehen. Das gesteuerte Erzeugen des Bremsmoments und/oder das gesteuerte Erzeugen des Antriebsmoments wird dabei in Abhängigkeit des erfassten Nickwinkels durchgeführt. Bevorzugt wird dabei das Antriebsmoment reduziert und/oder das Bremsmoment erhöht, wenn der erfasste Nickwinkel einen vorbestimmten Nickwinkel-Grenzwert überschreitet. Alternativ bevorzugt kann beispielsweise eine Nickwinkel-Änderung ermittelt werden, wobei vorzugsweise das Antriebsmoment reduziert und/oder das Bremsmoment erhöht wird, wenn die Nickwinkel-Änderung einen vorbestimmten Grenzwert überschreitet. Dadurch kann beispielsweise auf einfache und effektive Weise ein Abheben eines Vorderrades des Elektrofahrrads verhindert, oder dessen Auswirkung abgeschwächt werden. Das heißt, es kann beispielsweise eine Wheelie-Verhinderung beim Anfahren des Elektrofahrrads bereitgestellt werden.

Weiterhin führt die Erfindung zu einem Elektrofahrrad, umfassend ein Bremssystem, vorzugsweise ein hydraulisches Bremssystem, wobei insbesondere das Bremssystem einen steuerbar betätigbaren Aktuator umfasst, eine Antriebseinheit, welche insbesondere steuerbar betätigbar ausgebildet ist, und eine Steuereinheit, welche eingerichtet ist, das beschriebene Verfahren durchzuführen.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Elektrofahrrads bei dem ein Verfahren gemäß einem bevorzugten Ausführungsbeispiel der Erfindung durchgeführt wird,
- Figur 2: eine vereinfachte schematische Ansicht von Drehmomentdiagrammen, welche bei der Durchführung des Verfahrens gemäß dem bevorzugten Ausführungsbeispiel der Erfindung verwendet werden, und
- Figur 3: eine vereinfachte schematische des Elektrofahrrads der Figur 1 während der Durchführung des Verfahrens gemäß dem bevorzugten Ausführungsbeispiel der Erfindung an einer Steigung.

### Bevorzugte Ausführungsformen der Erfindung

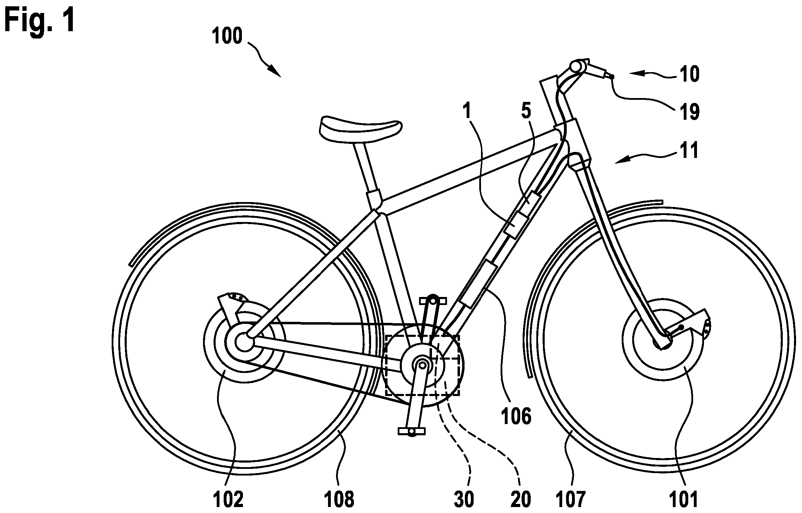

Figur 1 zeigt eine vereinfachte schematische Ansicht eines Elektrofahrrads 100, bei dem ein Verfahren gemäß einem bevorzugten Ausführungsbeispiel der Erfindung durchgeführt wird. Das Elektrofahrrad 100 umfasst eine Antriebseinheit 20, welche eingerichtet ist, eine Tretkraft eines Fahrers mittels Motorkraft zu unterstützen. Die Antriebseinheit 20 wird von einem elektrischen Energiespeicher 106 mit elektrischer Energie versorgt.

Das Elektrofahrrad 100 umfasst ein hydraulisches Bremssystem 10 mittels welchem Bremsen 101, 102 jeweils an einem Vorderrad 107 bzw. einem Hinterrad 108 des Elektrofahrrads 100 betätigt werden können. Das hydraulische Bremssystem 10 umfasst eine Antiblockiereinheit 1, welche ebenfalls von dem elektrischen Energiespeicher 106 mit elektrischer Energie versorgt wird.

Die Antiblockiereinheit 1 umfasst einen Aktuator 5, mittels welchem ein hydraulischer Bremsdruck in dem Bremssystem 10 steuerbar verändert werden kann. Insbesondere kann mittels des Aktuators 5 unabhängig von einer Betätigung eines Bremshebels 19 des Bremssystems 10 ein Bremsdruck in dem Bremssystem 10 verändert werden. Das heißt, insbesondere kann ein Bremsdruck aufgebaut und damit ein Bremsmoment erzeugt werden, ohne dass eine Betätigung des Bremshebels 19 erfolgt. Zudem kann bevorzugt auch während eine manuelle Betätigung des Bremshebel 19 vorliegt, ein Bremsdruck im Bremssystem 10 und damit das Bremsmoment reduziert werden.

Das Elektrofahrrad 100 umfasst ferner eine Steuereinheit 30, welche eingerichtet ist, das erfindungsgemäße Verfahren durchzuführen. Mittels der Steuereinheit 30 kann die gesteuerte Betätigung des Aktuators 5 sowie die gesteuerte Betätigung der Antriebseinheit 20 durchgeführt werden.

Das Verfahren umfasst zumindest zwei Betriebsmodi, welche beispielsweise gleichzeitig, oder alternativ unabhängig voneinander durchgeführt werden können.

In einem ersten Betriebsmodus wird mittels des Bremssystems 10, vorzugsweise während einer Fahrt des Elektrofahrrads 10, ein vorbestimmtes konstantes Bremsmoment erzeugt. Gleichzeitig wird mittels der Antriebseinheit 20 ein Antriebsmoment in Abhängigkeit einer durch den Fahrer des Elektrofahrrads 100 manuell erzeugten Tretkraft generiert.

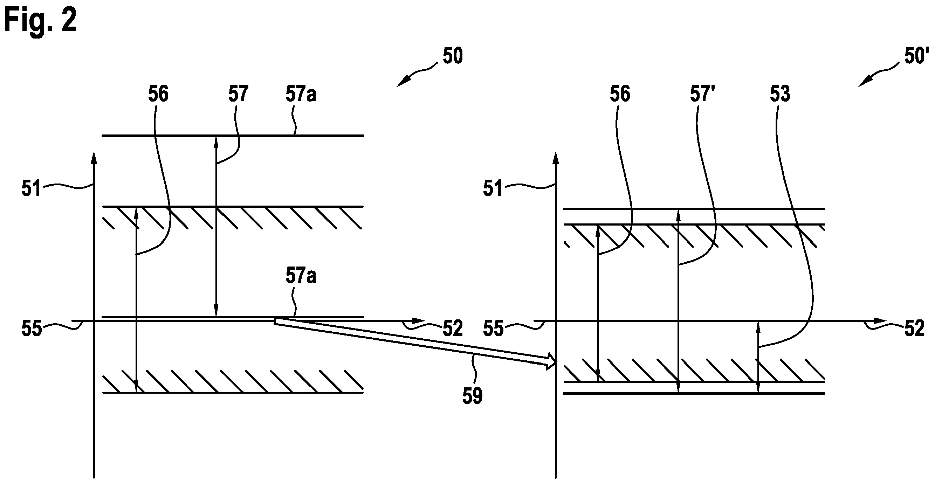

Der erste Betriebsmodus wird anhand der Figur 2 veranschaulicht und nachfolgend im Detail beschrieben. Figur 2 zeigt eine vereinfachte schematische Ansicht von Drehmomentdiagrammen 50, 50', welche bei der Durchführung des Verfahrens gemäß dem bevorzugten Ausführungsbeispiel der Erfindung verwendet werden. In beiden Drehmomentdiagrammen 50, 50' ist jeweils ein Drehmoment 51 in Abhängigkeit einer Geschwindigkeit 52 des Elektrofahrrads 100 dargestellt. Die Linie 55 kennzeichnet dabei ein Drehmoment von Null.

Ein erstes Drehmomentdiagramm 50, in der Figur 2 links, zeigt dabei eine vereinfachte schematische Ansicht eines Normalbetriebs ohne Durchführung des Verfahrens. Die beiden Linien 57a zeigen dabei einen Maximalwert und einen Minimalwert eines Antriebsmoments, das mittels der Antriebseinheit 20 erzeugt werden kann. Zwischen den beiden Linien 57a befindet sich somit ein Drehmoment-Bereich 57, der am Antrieb des Elektrofahrrads 100 bereitgestellt werden kann durch das gesteuerte Betätigen der Antriebseinheit 20. Dieser Drehmoment-Bereich 57 erstreckt sich von der Nulllinie 55 ausschließlich hinzu positiven Drehmomenten 51.

Bei der Durchführung des ersten Betriebsmodus des Verfahrens, das heißt, wenn mittels des Bremssystems 10 ein konstantes Bremsmoment 53 bereitgestellt wird, kann das in der Figur 2 rechts dargestellte zweite Drehmomentdiagramm 50' bereitgestellt werden. Wie in der Figur 2 zu erkennen, ist dabei der Drehmoment-Bereich 57', welcher im Wesentlichen dem Arbeitsbereich der Antriebseinheit 20 (vgl. Drehmomentbereich 57 im ersten Drehmomentdiagramm 50) entspricht, um das konstante Bremsmoment 53 relativ nach unten verschoben. Das heißt, durch Variation der gesteuerten Betätigung der Antriebseinheit 20 können in diesem Fall auch negative Gesamt-Drehmomente 51 am Elektrofahrrad 100 bereitgestellt werden.

Dadurch können vorteilhafte Fahrfunktionen des Elektrofahrrads 100, wie insbesondere eine Traktionskontrolle, auf verbesserte Art und Weise bereitgestellt werden. Dies wird in der Figur 2 anhand des weiteren Drehmoment-Bereichs 56 veranschaulicht. Dieser Drehmoment-Bereich 56 kennzeichnet einen optimalen Bereich für die Durchführung einer Traktionskontrolle am Hinterrad 108 des Elektrofahrrads 100. Wie in der Figur 2 zu erkennen, umfasst der Drehmoment-Bereich 56 auch negative Drehmomente 51, um beispielsweise bei einem sehr starken Traktionsverlust am Hinterrad 108 dieses aktiv abzubremsen.

Durch das Aufbringen des konstanten Bremsmoments 53 wird das Gesamt-Drehmoment am Elektrofahrrad 100, das allein durch die Variation der gesteuerten Betätigung der Antriebseinheit 20 bereitgestellt werden kann, derart verschoben, dass der zweite Drehmoment-Bereich 57' und der für die Traktionskontrolle optimale Drehmoment-Bereich 56 im Wesentlichen deckungsgleich ausgebildet sind. Das heißt, die Traktionskontrolle kann optimal alleine durch Änderung der Ansteuerung der Antriebseinheit 20 auf optimale Weise und für einen besonders breiten Einsatzbereich umgesetzt werden.

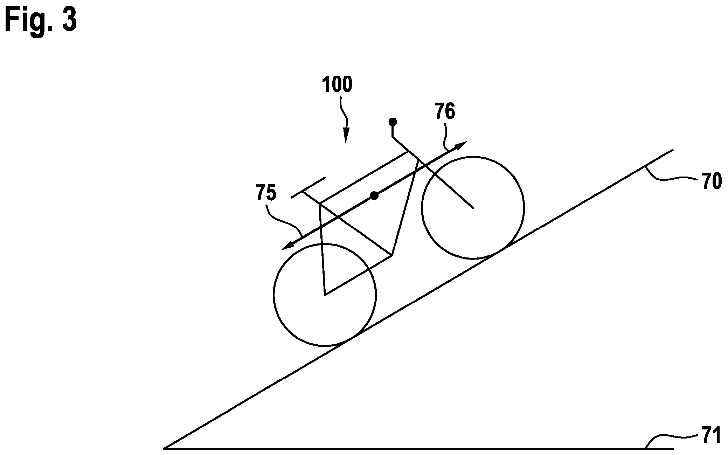

Ein zweiter Betriebsmodus des Verfahrens wird nachfolgend in Bezug auf die Figur 3 beschrieben. Mittels des zweiten Betriebsmodus kann ein Halten des Elektrofahrrads 100 an einer Steigung 70 sowie ein Anfahren des Elektrofahrrads 100 an der Steigung 70 bereitgestellt werden. Hierbei wird bei dem Verfahren eine Neigung des Elektrofahrrads relativ zu einer Horizontalen 71 erfasst. Basierend auf der erfassten Neigung und zusätzlich basierend auf einem Gesamtgewicht des Elektrofahrrads 100 wird mittels der Steuereinheit 30 ermittelt, welche Haltekraft 76 erforderlich ist, um das Elektrofahrrad 100 an der Steigung 70 im Stillstand zu halten. Die Haltekraft 76 wird dabei derart ermittelt, dass diese gleich einer Hangabtriebskraft 75, welche auf der Neigung und dem Gesamtgewicht des Elektrofahrrads 100 basiert, ist.

Die Haltekraft 76 kann bevorzugt durch das Antriebsmoment der Antriebseinheit 20 alleine, oder alternativ durch ein zusätzliches Bremsmoment des Bremssystems 10 bereitgestellt werden.

Bevorzugt wird der zweite Betriebsmodus dabei ausschließlich während einer manuellen Betätigung des Bremshebels 19 des Bremssystems 10 des Elektrofahrrads 100 durchgeführt. Das heißt, während der Fahrer den Bremshebel 19 angezogen hat, wird durch die entsprechend koordinierte Steuerung des Bremssystems 10 und der Antriebseinheit 20 die Haltekraft 76 erzeugt, um das Elektrofahrrad 100 an der Neigung 70 im Stillstand zu halten.

Zusätzlich kann im zweiten Betriebsmodus das Anfahren des Elektrofahrrads 100 dadurch initiiert werden, dass im Ansprechen auf eine Pedalbetätigung durch den Fahrer des Elektrofahrrads 101 das von dem Bremssystem 10 erzeugte Bremsmoment derart reduziert wird, dass das Elektrofahrrad 100 durch das Antriebsmoment der Antriebseinheit 20 beschleunigt wird. Insbesondere wird hierbei eine Vortriebskraft in Richtung der Haltekraft 76 erzeugt, welche größer ist als die Hangabtriebskraft 75, um das Elektrofahrrad 100 zu beschleunigen.

Bevorzugt kann in beiden Betriebsmodi zusätzlich eine Erfassung eines Nickwinkels des Elektrofahrrads 100 erfolgen. Mittels Überwachung des Nickwinkels 100 kann die koordinierte Steuerung von Bremsmoment und Antriebsmoment derart angepasst werden, dass unerwünschte Fahrzustände mit hohem Nickwinkel, sogenannte "Wheelies" vermieden werden können, oder dessen Auswirkungen verringert werden können. Hierfür kann insbesondere im Ansprechen auf eine Erkennung eines Nickwinkels, der einen vorbestimmten Nickwinkel-Grenzwert überschreitet, oder alternativ oder zusätzlich im Ansprechen auf eine Erkennung einer vorbestimmten Mindest-Nickwinkeländerung, ein Bremsmoment, insbesondere am Hinterrad 108, erhöht werden und/oder das Antriebsmoment der Antriebseinheit 20 reduziert werden.

## Patentansprüche

1. Verfahren zum Betreiben eines Elektrofahrrads (100), welches ein Bremssystem (10) und eine steuerbar betätigbare Antriebseinheit (20) aufweist, wobei das Bremssystem (10) einen steuerbar betätigbaren Aktuator (5) aufweist, zum gesteuerten Erzeugen eines Bremsmoments, umfassend die Schritte:
- gesteuertes Erzeugen eines Bremsmoments mittels des Bremssystems (10), und
- gesteuertes Erzeugen eines Antriebsmoments mittels der Antriebseinheit (20), **dadurch gekennzeichnet, dass** das gesteuerte Erzeugen des Bremsmoments und das gesteuerte Erzeugen des Antriebsmoments gleichzeitig und derart in Abhängigkeit voneinander erfolgt, um das Elektrofahrrad (100) mit einem vorbestimmten Gesamt-Bremsmoment zu verzögern, oder mit einem vorbestimmten Gesamt-Antriebsmoment zu beschleunigen.

2. Verfahren nach Anspruch 1, wobei in einem ersten Betriebsmodus ein vorbestimmtes konstantes Bremsmoment mittels des Bremssystems (10) erzeugt wird.

3. Verfahren nach Anspruch 2, wobei das vorbestimmte konstante Bremsmoment mindestens 10 %, vorzugsweise maximal 80 %, bevorzugt mindestens 30 %, besonders bevorzugt maximal 60 %, eines maximal mittels der Antriebseinheit (20) erzeugbaren Maximal-Antriebsmoments entspricht.

4. Verfahren nach einem der Ansprüche 2 oder 3, wobei das Erzeugen des vorbestimmten konstanten Bremsmoments unabhängig von einer Bremshebelkraft an einem Bremshebel (19) des Elektrofahrrads (100) erfolgt.

5. Verfahren nach einem der Ansprüche 2 bis 4, ferner umfassend den Schritt:
- Erfassen eines Radschlupfes,
wobei das gesteuerte Erzeugen des Antriebsmoments in Abhängigkeit des erfassten Radschlupfes durchgeführt wird, insbesondere wobei das Antriebsmoment reduziert wird, wenn der erfasste Radschlupf einen vorbestimmten Radschlupf-Grenzwert überschreitet.

6. Verfahren nach einem der Ansprüche 2 bis 5, ferner umfassend den Schritt:
- Erfassen eines Nickwinkels des Elektrofahrrads (100),
wobei das gesteuerte Erzeugen des Antriebsmoments in Abhängigkeit des erfassten Nickwinkels durchgeführt wird, insbesondere wobei das Antriebsmoment reduziert wird, wenn der erfasste Nickwinkel einen vorbestimmten Nickwinkel-Grenzwert überschreitet.

7. Verfahren nach einem der vorhergehenden Ansprüche, wobei in einem zweiten Betriebsmodus das gesteuerte Erzeugen des Bremsmoments und das gesteuerte Erzeugen des Antriebsmoments derart erfolgt, um das Elektrofahrrad (100) im Stillstand zu halten.

8. Verfahren nach Anspruch 7, ferner umfassend den Schritt:
- Erfassen einer Neigung des Elektrofahrrads (100),
wobei das gesteuerte Erzeugen des Bremsmoments und das gesteuerte Erzeugen des Antriebsmoments in Abhängigkeit der erfassten Neigung durchgeführt wird.

9. Verfahren nach Anspruch 8, wobei das gesteuerte Erzeugen des Bremsmoments und das gesteuerte Erzeugen des Antriebsmoments zusätzlich in Abhängigkeit eines Gesamtgewichts des Elektrofahrrads (100) durchgeführt wird.

10. Verfahren nach einem der Ansprüche 7 bis 9, ferner umfassend den Schritt:
- gesteuertes Reduzieren eines mittels des Bremssystems (10) erzeugten Bremsdrucks im Ansprechen auf eine Pedalbetätigung derart, dass das Elektrofahrrad (100) durch das Antriebsmoment beschleunigt wird.

11. Verfahren nach einem der Ansprüche 7 bis 10, ferner umfassend den Schritt:
- Erfassen eines Nickwinkels des Elektrofahrrads (100),
wobei das gesteuerte Erzeugen des Bremsmoments und/oder das gesteuerte Erzeugen des Antriebsmoments in Abhängigkeit des erfassten Nickwinkels durchgeführt wird, insbesondere wobei das Antriebsmoment reduziert wird und/oder das Bremsmoment erhöht wird, wenn der erfasste Nickwinkel einen vorbestimmten Nickwinkel-Grenzwert überschreitet.

12. Elektrofahrrad, umfassend:
- ein Bremssystem (10),
- eine Antriebseinheit (20), und
- eine Steuereinheit (30), welche eingerichtet ist, ein Verfahren nach einem der vorhergehenden Ansprüche durchzuführen.

## Claims

1. Method for operating an electric bicycle (100) which comprises a brake system (10) and a controllably actuable drive unit (20), wherein the brake system (10) has a controllably actuable actuator (5), for controlled generation of a braking torque, comprising the steps of:
- controlled generation of a braking torque by means of the brake system (10), and
- controlled generation of a drive torque by means of the drive unit (20),
**characterized in that**
the controlled generation of the braking torque and the controlled generation of the drive torque are performed at the same time and depending on each other in such a way as to decelerate the electric bicycle (100) with a predetermined overall braking torque or to accelerate the electric bicycle with a predetermined overall drive torque.

2. Method according to Claim 1, wherein, in a first operating mode, a predetermined constant braking torque is generated by means of the brake system (10).

3. Method according to Claim 2, wherein the predetermined constant braking torque corresponds to at least 10%, preferably at most 80%, preferably at least 30%, particularly preferably at most 60%, of a maximum drive torque that can be generated at most by means of the drive unit (20).

4. Method according to either of Claims 2 and 3, wherein the generation of the predetermined constant braking torque is performed independently of a brake lever force on a brake lever (19) of the electric bicycle (100).

5. Method according to any of Claims 2 to 4, further comprising the step of:
- detection of a wheel slip,
wherein the controlled generation of the drive torque is carried out depending on the detected wheel slip, in particular wherein the drive torque is reduced when the detected wheel slip exceeds a predetermined wheel slip limit value.

6. Method according to any of Claims 2 to 5, further comprising the step of:
- detection of a pitch angle of the electric bicycle (100),
wherein the controlled generation of the drive torque is carried out depending on the detected pitch angle, in particular wherein the drive torque is reduced when the detected pitch angle exceeds a predetermined pitch angle limit value.

7. Method according to any of the preceding claims, wherein, in a second operating mode, the controlled generation of the braking torque and the controlled generation of the drive torque is performed in such a way as to keep the electric bicycle (100) at a standstill.

8. Method according to Claim 7, further comprising the step of:
- detection of an inclination of the electric bicycle (100),
wherein the controlled generation of the braking torque and the controlled generation of the drive torque are carried out depending on the detected inclination.

9. Method according to Claim 8, wherein the controlled generation of the braking torque and the controlled generation of the drive torque are additionally carried out depending on a total weight of the electric bicycle (100).

10. Method according to any of Claims 7 to 9, further comprising the step of:
- controlled reduction of a brake pressure generated by means of the brake system (10) in response to pedal actuation in such a way that the electric bicycle (100) is accelerated by the drive torque.

11. Method according to any of Claims 7 to 10, further comprising the step of:
- detection of a pitch angle of the electric bicycle (100),
wherein the controlled generation of the braking torque and/or the controlled generation of the drive torque are/is carried out depending on the detected pitch angle, in particular wherein the drive torque is reduced and/or the braking torque is increased when the detected pitch angle exceeds a predetermined pitch angle limit value.

12. Electric bicycle, comprising:
- a brake system (10),
- a drive unit (20), and
- a control unit (30) which is designed to carry out a method according to any of the preceding claims.

## Revendications

1. Procédé de fonctionnement d'une bicyclette électrique (100) comprenant un système de freinage (10) et une unité d'entraînement (20) à actionnement pouvant être commandé, le système de freinage (10) comprenant un actionneur (5) à actionnement pouvant être commandé pour la génération commandée d'un couple de freinage, comprenant les étapes consistant à :
- générer de manière commandée un couple de freinage au moyen du système de freinage (10), et
- générer de manière commandée un couple d'entraînement au moyen de l'unité d'entraînement (20),
**caractérisé en ce que**
la génération commandée du couple de freinage et la génération commandée du couple d'entraînement s'effectuent simultanément et de manière dépendante l'une de l'autre, afin de décélérer la bicyclette électrique (100) avec un couple de freinage total prédéterminé, ou de l'accélérer avec un couple d'entraînement total prédéterminé.

2. Procédé selon la revendication 1, dans lequel, dans un premier mode de fonctionnement, un couple de freinage constant prédéterminé est généré au moyen du système de freinage (10).

3. Procédé selon la revendication 2, dans lequel le couple de freinage constant prédéterminé correspond à au moins 10 %, de préférence au maximum 80 %, de préférence au moins 30 %, et de façon particulièrement préférée au maximum 60 %, d'un couple d'entraînement maximal pouvant être généré au moyen de l'unité d'entraînement (20).

4. Procédé selon l'une quelconque des revendications 2 ou 3, dans lequel la génération du couple de freinage constant prédéterminé est effectuée indépendamment d'une force de levier de freinage exercée sur un levier de frein (19) de la bicyclette électrique (100).

5. Procédé selon l'une quelconque des revendications 2 à 4, comprenant en outre l'étape consistant à :
- détecter un patinage de roue,
dans lequel la génération commandée du couple d'entraînement est effectuée en fonction du patinage de roue détecté, en particulier dans lequel le couple d'entraînement est réduit lorsque le patinage de roue détecté dépasse une valeur limite de patinage de roue prédéterminée.

6. Procédé selon l'une quelconque des revendications 2 à 5, comprenant en outre l'étape consistant à :
- détecter un angle de tangage de la bicyclette électrique (100),
dans lequel la génération commandée du couple d'entraînement est effectuée en fonction de l'angle de tangage détecté, en particulier dans lequel le couple d'entraînement est réduit lorsque l'angle de tangage détecté dépasse une valeur limite d'angle de tangage prédéterminée.

7. Procédé selon l'une quelconque des revendications précédentes, dans lequel, dans un second mode de fonctionnement, la génération commandée du couple de freinage et la génération commandée du couple d'entraînement s'effectuent de manière à maintenir la bicyclette électrique (100) à l'arrêt.

8. Procédé selon la revendication 7, comprenant en outre l'étape consistant à :
- détecter une inclinaison de la bicyclette électrique (100),
dans lequel la génération commandée du couple de freinage et la génération commandée du couple d'entraînement sont effectuées en fonction de l'inclinaison détectée.

9. Procédé selon la revendication 8, dans lequel la génération commandée du couple de freinage et la génération commandée du couple d'entraînement sont en outre effectuées en fonction d'un poids total de la bicyclette électrique (100).

10. Procédé selon l'une quelconque des revendications 7 à 9, comprenant en outre l'étape consistant à :
- réduire de manière commandée une pression de freinage générée au moyen du système de freinage (10) en réponse à un actionnement de pédale de manière à ce que la bicyclette électrique (100) soit accélérée par le couple d'entraînement.

11. Procédé selon l'une quelconque des revendications 7 à 10, comprenant en outre l'étape consistant à :
- détecter un angle de tangage de la bicyclette électrique (100),
dans lequel la génération commandée du couple de freinage et/ou la génération commandée du couple d'entraînement sont effectuées en fonction de l'angle de tangage détecté, en particulier dans lequel le couple d'entraînement est réduit et/ou le couple de freinage est augmenté lorsque l'angle de tangage détecté dépasse une valeur limite d'angle de tangage prédéterminée.

12. Bicyclette électrique, comprenant :
- un système de freinage (10),
- une unité d'entraînement (20), et
- une unité de commande (30), qui est conçue pour mettre en œuvre un procédé selon l'une quelconque des revendications précédentes.
